# EUROPÄISCHE PATENTSCHRIFT

(11) **EP 1 516 012 B1**
(45) Veröffentlichungstag und Bekanntmachung des Hinweises auf die Patenterteilung: **23.12.2009**
(21) Anmeldenummer: 03740182.5
(22) Anmeldetag: 04.06.2003
(51) Int. Cl.: C08J 5/08, C08G 18/80, C03C 25/32, C09D 175/16

(54) **GLASFASERVERSTÄRKTE KUNSTSTOFFE**
GLASS FIBRE REINFORCED PLASTICS
MATIERES PLASTIQUES RENFORCEES PAR FIBRE DE VERRE

(30) Priorität: 17.06.2002 DE 10226933
(43) Veröffentlichungstag der Anmeldung: 23.03.2005
(73) Patentinhaber: Bayer MaterialScience AG, 51368 Leverkusen (DE)
(72) Erfinder: RISCHE, Thorsten, 59423 Unna (DE); WEIKARD, Jan, 51519 Odenthal (DE); FELLER, Thomas, 42659 Solingen (DE); LÜHMANN, Erhard, 29699 Bomlitz (DE); NAUJOKS, Karin, 51519 Odenthal (DE)
(86) Internationale Anmeldenummer: PCT/EP2003/005828
(87) Internationale Veröffentlichungsnummer: WO 2003/106542

(56) Entgegenhaltungen:
- EP-A- 0 792 900
- WO-A-00/59973
- WO-A-01/23453
- WO-A-02/36657

## Beschreibung

Die Erfindung betrifft ein neues Verfahren zur Herstellung von glasfaserverstärkten Kunststoffen unter Einsatz energiereicher Strahlung.

Wässrige Beschichtungsmittel auf Basis von Polyurethandispersionen und blockierten Polyisocyanaten sind bekannt. Sie werden z.B. zu einkomponentigen Beschichtungsmitteln kombiniert. Solche Beschichtungsmittel werden beispielsweise bei der Beschlichtung von Glasfasern z.B. für Glasfaser-verstärkte Kunststoffe eingesetzt. Nach Auftrag auf die Glasfasern wird zunächst das Wasser entfernt. Der entstehende Film (Schlichte) wird durch zumindest teilweise Deblockierung und Reaktion von enthaltenen Polyisocyanaten vernetzt. Eine weitere Reaktion der in der Schlichte enthaltenen Polyisocyanate erfolgt beim Einarbeiten der Glasfasern in Kunststoffe. Ein Problem dieser Vorgehensweise ist, dass die Deblockierung und Reaktion der Polyisocyanate bei der Beschlichtung der Glasfaser und beim Einarbeiten in Kunststoffe schwer voneinander zu-trennen sind, so dass eine Prozessunsicherheit resultiert. Es ist daher vorteilhaft, zwei voneinander unabhängig aktivierbare Härtungsmechanismen zu verwenden.

Die Kombination von Härtung durch Photopolymerisation in wässrigen Beschichtungsmitteln, die ungesättigte Acrylate enthalten, und Nachhärtung durch Deblockierung von Polyisocyanaten und deren Vernetzung mit Polyolen ist beispielsweise aus der Mehrschichtlackierung von Automobilen bekannt. In der WO-A 01/23453 werden UV-Strahlung sowie thermisch härtbare wässrige Polyurethandispersionen, die sowohl UV-härtbare Gruppen als auch blockierte Isocyanatgruppen enthalten, offenbart. Nachteilig sind hier die verwendeten zumeist monofunktionellen Acrylatmonomeren eines geringen Molekulargewichts, die den Aufbau von hochmolekularen Dispersionen verhindern. Weiterhin werden häufig zur Erzielung ausreichender Eigenschaften sogenannte Reaktivverdünner, wie z.B. mehrfunktionelle, niedermolekulare Acrylate mit teilweise bedenklichen physiologischen Eigenschaften zugegeben, die zudem eine physikalische Antrocknung der Beschichtung verhindern.

Aufgabe der vorliegenden Erfindung war die Bereitstellung eines neuen Verfahrens zur Herstellung glasfaserverstärkter Kunststoffe, wobei der Härtungsmechanismus der Schlichte-Zusammensetzung durch zwei getrennt voneinander aktivierbare Vernetzungsmechanismen kontrolliert ablaufen kann.

Gelöst wurde diese Aufgabe durch Einsatz wässriger UV-härtender Polyurethandispersionen, die wenig oder keine aktiven Wasserstoffatome enthalten, in Kombination mit wasserdispergierbaren oder wasserlöslichen blockierten Polyisocyanaten.

Gegenstand der Erfindung ist somit ein Verfahren zur Herstellung von glasfaserverstärkten Kunststoffen, **dadurch gekennzeichnet, dass** eine Schlichte-Zusammensetzung auf die Glasfaser appliziert, das Wasser entfernt wird, anschließend eine Bestrahlung mit energiereicher Strahlung erfolgt und in einem zweiten Schritt die beschlichtete Glasfaser in den Kunststoff eingetragen und eine thermische Härtung bei 150 bis 300°C unter Freisetzung der Polyisocyanat-Gruppen durch Deblockierung durchgeführt wird.

Die im erfindungsgemäßen Verfahren eingesetzte Schlichte-Zusammensetzung enthält:
(I) mindestens ein wasserdispergierbares oder wasserlösliches blockiertes Polyisocyanat (A),
(II) mindestens ein radikalisch polymerisierbare Gruppen enthaltendes Polyurethan (B) mit einem Gehalt an Zerewitinoff-aktiven Wasserstoff-Atomen enthaltenden Gruppen von 0 bis 0,53 mmol/g, bevorzugt 0 bis 0,4 mmol/g, besonders bevorzugt von 0 bis 0,25 mmol/g und
(III) einen Initiator (C), der eine radikalische Polymerisation auslösen kann.

Im Sinne der vorliegenden Erfindung sind Gruppen mit Zerewitinoff-aktiven H-Atomen Hydroxyl-, primäre oder sekundäre Amin- oder Thiolgruppen.

Erfindungsgemäß liegen die Polyurethane (B) als wässrige Polyurethan-Dispersionen, Emulsionen oder Lösungen vor, die durch Polyaddition von Di- oder Polyisocyanaten (Komponente a) mit gegenüber Isocyanaten reaktiven Verbindungen (Komponente (b1) bis (b5)) hergestellt werden.

Geeignete Polyisocyanate (a) sind aromatische, araliphatische, aliphatische oder cycloaliphatische Polyisocyanate. Es können auch Mischungen solcher Polyisocyanate eingesetzt werden. Beispiele geeigneter Polyisocyanate sind Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)-methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4-und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Uretdion-, Iminooxadiazindionstruktur und Mischungen derselben. Bevorzugt sind Hexamethylendiisocyanat, Isophorondiisocyanat und die isomeren, Bis(4,4'-isocyanatocyclohexyl)methane sowie deren Mischungen.

Das in den erfindungsgemäßen wässrigen Beschichtungsmitteln enthaltene Polyurethan (B) ist ein Reaktionsprodukt aus
(a) ein oder mehrere Di- oder Polyisocyanate,
(b1) ein oder mehrere hydrophilierend wirkende Verbindungen mit ionischen und/oder in ionische Gruppen überführbare Gruppen und/oder nichtionischen Gruppen,
(b2) ein oder mehrere Verbindungen mit radikalisch polymerisierbaren Gruppen,
(b3) gegebenenfalls ein oder mehrere Polyolverbindungen mit einem mittleren Molekulargewicht von 50 bis 500, bevorzugt 80 bis 200 und einer Hydroxylfunktionalität größer oder gleich 2 und kleiner oder gleich 3,
(b4) gegebenenfalls ein oder mehrere Polyolverbindungen mit einem mittleren Molekulargewicht von 500 bis 13000 g/mol, bevorzugt 700 bis 4000 g/mol mit einer mittleren Hydroxylfunktionalität von 1,5 bis 2,5, bevorzugt von 1,8 bis 2,2, besonders bevorzugt von 1,9 bis 2,1,
(b5) gegebenenfalls ein oder mehrere Di- oder Polyamine.

Die Komponente (b1) enthält ionische Gruppen, die entweder kationischer oder anionischer Natur sein können und/oder nichtionische hydrophile Gruppen. Kationisch, anionisch oder nichtionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen.

Geeignete ionische oder potentiell ionische Verbindungen (b1) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentiell ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierend wirkende Verbindungen sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel (I), 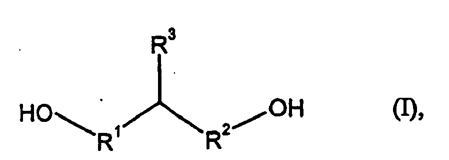 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen alkoxyterminierten Polyethylenoxidrest steht.

Nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanol oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Die Komponente (b1) ist bevorzugt eine Kombination aus nichtionischen und ionischen Hydrophilierungsmitteln. Besonders bevorzugt sind Kombinationen aus nichtionischen und anionischen Hydrophilierungsmitteln.

Die Komponente (b2) enthält radikalisch polymerisierbare Doppelbindungen, bevorzugt hydroxyfunktionelle Acrylate oder Methacrylate. Beispiele sind 2-Hydroxyethyl(meth)acrylat, Polyethylenoxid-mono(meth)acrylate, Polypropylenoxidmono-(meth)acrylate, Polyalkylenoxidmono(meth)acrylate, Poly(ε-caprolacton)mono-(meth)acrylate, wie z.B. Tone^{®} M100 (Union Carbide, USA), 2-Hydroxypropyl-(meth)acrylat, 4-Hydroxybutyl(meth)acrylat, 3-Hydroxy-2,2-dimethylpropyl(meth)-acrylat, die Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische. Bevorzugt sind die acrylierten Monoalkohole. Geeignet sind auch Alkohole, die sich aus der Umsetzung von doppelbindungshaltigen Säuren mit gegebenenfalls doppelbindungshaltigen, monomeren Epoxidverbindungen erhalten lassen, so zum z.B. die Umsetzungsprodukte von (Meth)acrylsäure mit Glycidyl(meth)acrylat oder dem Glycidylester der Versaticsäure.

Weiterhin können Isocyanat-reaktive oligomere oder polymere ungesättigte Acrylat- und/oder Methacrylatgruppen enthaltende Verbindungen alleine oder in Kombination mit den vorgenannten monomeren Verbindungen eingesetzt werden. Bevorzugt werden als Komponente (b2) hydroxylgruppenhaltige Polyesteracrylate mit einem OH-Gehalt von 30 bis 300 mg KOH/g, bevorzugt 60 bis 200, besonders bevorzugt 70 bis 120 eingesetzt. Bei der Herstellung der hydroxyfunktionellen Polyesteracrylate können insgesamt 7 Gruppen von Monomerbestandteilen zur Anwendung kommen:
1. (Cyclo)Alkandiole wie zweiwertige Alkohole mit (cyclo)aliphatisch gebundenen Hydroxylgruppen des Molekulargewichtsbereichs 62 bis 286, z.B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-l,4-dimethanol, 1,2- und 1,4-Cyclohexandiol, 2-Ethyl-2-butylpropandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole mit einem Molekulargewicht von 200 bis 4000, bevorzugt 300 bis 2000, besonders bevorzugt 450 bis 1200. Umsetzungsprodukte der zuvor genannten Diole mit ε-Caprolacton oder anderen Lactonen können ebenfalls als Diole zum Einsatz gelangen.
2. Drei- und höherwertige Alkohole des Molekulargewichtsbereichs 92 bis 254, wie z.B. Glycerin, Trimethylolpropan, Pentaerythrit, Dipentaerythrit und Sorbit oder auf diesen Alkoholen gestartete Polyether wie z.B. das Umsetzungsprodukt von 1 mol Trimethylolpropan mit 4 mol Ethylenoxid.
3. Monoalkohole wie z.B. Ethanol, 1- und 2-Propanol, 1- und 2-Butanol, 1- Hexanol, 2-Ethylhexanol, Cyclohexanol und Benzylalkohol.
4. Dicarbonsäuren des Molekulargewichtsbereichs 104 bis 600 und/oder deren Anhydride, wie z.B. Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimerfettsäuren.
5. Höherfunktionelle Carbonsäuren bzw. deren Anhydride wie z.B. Trimellithsäure und Trimellithsäureanhydrid.
6. Monocarbonsäuren, wie z.B. Benzoesäure, Cyclohexancarbonsäure, 2-Ethylhexansäure, Capronsäure, Caprylsäure, Caprinsäure, Laurinsäure, natürliche und synthetische Fettsäuren.
7. Acrylsäure, Methacrylsäure bzw. dimere Acrylsäure.

Geeignete hydroxylgruppenhaltige Polyesteracrylate enthalten das Umsetzungsprodukt von mindestens einem Bestandteil aus Gruppe 1 oder 2 mit mindestens einem Bestandteil aus Gruppe 4 oder 5 und mindestens einem Bestandteil aus Gruppe 7.

Gegebenenfalls können in diese Polyesteracrylate auch aus dem Stand der Technik allgemein bekannte, dispergierend wirkende Gruppen eingebaut werden. So können als Alkoholkomponente anteilig Polyethylenglykole und/oder Methoxypolyethylenglykole mitverwendet werden. Als Verbindungen seien beispielsweise auf Alkoholen gestartete Polyethylenglykole, Polypropylenglykole und deren Blockcopolymere sowie die Monomethylether dieser Polyglykole genannt. Besonders geeignet ist Polyethylenglykol-1500- und/oder Polyethylenglykol-500-mono-methylether.

Weiterhin ist es möglich, nach der Veresterung einen Teil von Carboxylgruppen, insbesondere die der (Meth)acrylsäure, mit Mono-, Di- oder Polyepoxiden umzusetzen. Bevorzugt sind beispielsweise die Epoxide (Glycidylether) von monomeren, oligomeren oder polymeren Bisphenol-A, Bisphenol-F, Hexandiol und/oder Butandiol oder deren ethoxilierten und/oder propoxilierten Derivaten. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g. Die Reaktion wird bevorzugt durch Katalysatoren wie Triphenyphosphin, Thiodiglykol, Ammonium- und/oder Phosphoniumhalogeniden und/oder Zirkon- oder Zinnverbindungen wie Zinn(II)ethylhexanoat katalysiert.

Die Herstellung von Polyesteracrylaten wird in der DE-A 4 040 290 (S.3, Z. 25 - S.6, Z. 24), DE-A-3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123 - 135 beschrieben.

Ebenfalls bevorzugt als Komponente (b2) sind die an sich bekannten hydroxylgruppenhaltigen Epoxy(meth)acrylate mit OH-Gehalten von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit OH-Gehalten von 20 bis 300 mg KOH/g, bevorzugt von 40 bis 150 mg KOH/g, besonders bevorzugt von 50 bis 100 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London S 37 - 56 beschrieben. Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten.

Geeignete niedermolekulare Polyole (b3) sind kurzkettige, d.h. 2 bis 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Geeignete höhermolekulare Polyole (b4) sind Di- oder Polyole mit einem zahlenmittleren Molekulargewicht im Bereich von 500 bis 13000 g/mol, bevorzugt 700 bis 4000 g/mol. Bevorzugt werden Polymere mit einer mittleren Hydroxylfunktionalität von 1,5 bis 2,5, bevorzugt von 1,8 bis 2,2, besonders bevorzugt von 1,9 bis 2,1. Dazu zählen z.B. Polyesteralkohole auf Basis von aliphatischen, cycloaliphatischen und/oder aromatischen Di-, Tri- und/oder Polycarbonsäuren mit Di-, Tri-, und/oder Polyolen sowie Polyesteralkohole auf Lacton-Basis. Bevorzugte Polyesteralkohole sind z.B. Umsetzungsprodukte von Adipinsäure mit Hexandiol, Butandiol oder Neopentylglykol oder Mischungen der genannten Diole des Molekulargewichts von 500 bis 4000, besonders bevorzugt 800 bis 2500. Ebenfalls geeignet sind Polyetherole, die durch Polymerisation von cyclischen Ethern oder durch Umsetzung von Alkylenoxiden mit einem Startermolekül erhältlich sind. Beispielhaft seien genannt die Polyethylen- und/oder Polypropylenglykole eines mittleren Molekulargewichts von 500 bis 13000, weiterhin Polytetrahydrofurane eines mittleren Molekulargewichts von 500 bis 8000, bevorzugt von 800 bis 3000. Ebenfalls geeignet sind hydroxyl-terminierte Polycarbonate, die durch Umsetzung von Diolen oder auch Lacton-modifizierten Diolen oder auch Bisphenolen, wie z.B. Bisphenol A, mit Phosgen oder Kohlensäurediestern wie Diphenylcarbonat oder Dimethylcarbonat zugänglich sind. Beispielhaft seine genannt die polymeren Carbonate des 1,6-Hexandiols eines mittleren Molekulargewichts von 500 bis 8000, sowie die Carbonate von Umsetzungsprodukten des 1,6-Hexandiols mit ε-Caprolacton im molaren Verhältnis von 1 bis 0,1. Bevorzugt sind vorgenannte Polycarbonatdiole eines mittleren Molekulargewichts von 800 bis 3000 auf Basis 1,6-Hexandiol und/oder Carbonate von Umsetzungsprodukten des 1,6-Hexandiols mit ε-Caprolacton im molaren Verhältnis von 1 bis 0,33. Hydroxyl-terminierte Polyamidalkohole und Hydroxyl-terminierte Polyacrylatdiole, z.B. Tegomer^{®} BD 1000 (Fa. Tego GmbH, Essen, DE) sind ebenfalls einsetzbar.

Die Komponente (b5) ist ausgewählt aus der Gruppe der Di- und/oder Polyamine, die zum Erhöhen der Molmasse eingesetzt werden und bevorzugt gegen Ende der Polyadditionsreaktion zugegeben werden. Bevorzugt findet diese Reaktion im wässrigen Medium statt. Dann müssen die Di- und/oder Polyamine reaktiver als Wasser gegenüber den Isocyanatgruppen der Komponente (a) sein. Exemplarisch seien genannt Ethylendiamin, 1,3-Propylendiamin, 1,6-Hexamethylendiamin, Isophorondiamin, 1,3-, 1,4-Phenylendiamin, 4,4'-Diphenylmethandiamin, aminofunktionelle Polyethylenoxide oder Polypropylenoxide, die unter dem Namen Jeffamin^{®}, D-Reihe (Fa. Huntsman Corp. Europe, Belgien) erhältlich sind, Diethylentriamin, Triethylentetramin und Hydrazin. Bevorzugt sind Isophorondiamin, Ethylendiamin, 1,6-Hexamethylendiamin. Besonders bevorzugt ist Ethylendiamin.

Anteilig können auch Monoamine, wie z.B. Butylamin, Ethylamin und Amine der Jeffamin^{®} M-Reihe (Huntsman Corp. Europe, Belgien), aminofunktionelle Polyethylenoxide und Polypropylenoxide zugesetzt werden.

Die Herstellung des Polyurethans (B) kann in einer oder mehreren Stufen in homogener, oder bei mehrstufiger Umsetzung, teilweise in disperser Phase durchgeführt werden. Nach vollständig oder teilweise durchgeführter Polyaddition erfolgt ein Dispergier-, Emulgier- oder Lösungsschritt. Im Anschluss erfolgt gegebenenfalls eine weitere Polyaddition oder Modifikation in disperser Phase.

Zur Herstellung des Polyurethans (B) können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671-1682). Bevorzugt ist das Schmelz-Emulgier- und das Aceton-Verfahren. Besonders bevorzugt ist das Aceton-Verfahren.

Üblicherweise werden die Bestandteile (b1) bis (b5), die keine primären oder sekundären Aminogruppen aufweisen und ein Polyisocyanat (a) zur Herstellung eines Polyurethan-Präpolymers im Rektor ganz oder teilweise vorgelegt und gegebenenfalls mit einem mit Wasser mischbaren aber gegenüber Isocyanatgruppen inerten Lösungsmittel verdünnt, bevorzugt aber ohne Lösungsmittel, auf höhere Temperaturen, bevorzugt im Bereich von 50 bis 120°C, aufgeheizt.

Geeignete Lösungsmittel sind z.B. Aceton, Butanon, Tetrahydrofuran, Dioxan, Acetonitril, Dipropylenglykoldimethylether und 1-Methyl-2-pyrrolidon, die nicht nur zu Beginn der Herstellung sondern gegebenenfalls in Teilen auch später zugegeben werden können. Bevorzugt sind Aceton und Butanon. Es ist möglich, die Reaktion unter Normaldruck oder erhöhtem Druck, z.B. oberhalb der Normaldruck Siedetemperatur eines gegebenenfalls zugegebenen Lösemittels, wie z.B. Aceton, durchzuführen.

Weiterhin können die zur Beschleunigung der Isocyanatadditionsreaktion bekannten Katalysatoren, wie z.B. Triethylamin, 1,4-Diazabicyclo-[2,2,2]-octan, Zinndioktoat oder Dibutylzinndilaurat mit vorgelegt oder später zudosiert werden. Bevorzugt ist Dibutylzinndilaurat.

Anschließend werden die gegebenenfalls zu Beginn der Reaktion noch nicht zugegebenen Bestandteile (a) und/oder (b1) bis (b4), die keine primären oder sekundären Aminogruppen aufweisen zudosiert. Bei der Herstellung des Polyurethan-Präpolymeren beträgt das Stoffnengenverhältnis von Isocyanatgruppen zu mit Isocyanat reaktiven Gruppen 0,90 bis 3, bevorzugt 0,95 bis 2, besonders bevorzugt 1,05 bis 1,5. Die Umsetzung der Komponenten (a) mit (b) erfolgt bezogen auf die Gesamtmenge an mit Isocyanaten reaktiven Gruppen des vorgelegten Teils von (b), der keine primären oder sekundären Aminogruppen aufweist, teilweise oder vollständig, bevorzugt aber vollständig. Der Umsetzungsgrad wird üblicherweise durch Verfolgung des NCO-Gehalts der Reaktionsmischung überwacht. Dazu können sowohl spektroskopische Messungen, z.B. Infrarot- oder Nahinfrarot-Spektren, Bestimmungen des Brechungsindex als auch chemische Analysen, wie Titrationen, von entnommenen Proben vorgenommen werden. Es werden Polyurethan-Präpolymere, die freie Isocyanatgruppen enthalten, in Substanz oder in Lösung erhalten.

Nach oder während der Herstellung der Polyurethan-Präpolymere aus (a) und (b) erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie Ammoniak, Ammoniumcarbonat oder -hydrogencarbonat, Trimethylamin, Triethylamin, Tributylamin, Diisopropylethylamin, Dimethylethanolamin, Diethylethanolamin, Triethanolamin, Kaliumhydroxid oder Natriumcarbonat eingesetzt, bevorzugt Triethylamin, Triethanolamin, Dimethylethanolamin oder Diisopropylethylamin. Die Stoffmenge der Basen liegt zwischen 50 und 100%, bevorzugt zwischen 60 und 90% der Stoffmenge der anionischen Gruppen. Im Falle kationischer Gruppen werden Schwefelsäuredimethylester oder Bernsteinsäure eingesetzt. Werden nur nichtionisch hydrophilierte Verbindungen (b1) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Die gegebenenfalls noch verbliebenen Isocyanatgruppen werden durch Reaktion mit aminischen Komponenten (b5) und/oder falls vorhanden aminischen Komponenten (b1) umgesetzt. Diese Kettenverlängerung kann dabei entweder in Lösungsmittel vor dem Dispergieren oder in Wasser nach dem Dispergieren durchgeführt werden. Sind aminischen Komponenten (b1) enthalten, erfolgt die Kettenverlängerung bevorzugt vor der Dispergierung.

Die Di- oder Polyamine (b5) und/oder falls vorhanden die aminische Komponente (b1) kann mit organischen Lösungsmitteln und/oder mit Wasser verdünnt dem Reaktionsgemisch zugegeben werden. Bevorzugt werden 70 bis 95 Gew.-% Lösungsmittel und/oder Wasser eingesetzt. Sind mehrere aminische Komponeten (b1) und/oder (b5) vorhanden, so kann die Umsetzung nacheinander in beliebiger Reihenfolge oder gleichzeitig durch Zugabe einer Mischung erfolgen.

Zwecks Herstellung der Polyurethan-Dispersion (B) werden die Polyurethan-Präpolymere, gegebenenfalls unter starker Scherung, wie z.B. starkem Rühren, entweder in das Dispergierwasser eingetragen oder man rührt umgekehrt das Dispergierwasser zu den Präpolymeren. Anschließend kann dann, falls noch nicht in der homogenen Phase geschehen, die Molmassenerhöhung durch Reaktion von gegebenenfalls vorhandenen Isocyanatgruppen mit der Komponente (b5) erfolgen. Die eingesetzte Menge an Polyamin (b5) hängt von den noch vorhandenen, nicht umgesetzten Isocyanatgruppen ab. Bevorzugt werden 50 bis 100 %, besonders bevorzugt 75 bis 95 % der Stoffmenge der Isocyanatgruppen mit Polyaminen (b5) umgesetzt.

Die entstehenden Polyurethan-Polyharnstoff-Präpolymere weisen einen Isocyanatgehalt von 0 bis 2 Gew.-%, bevorzugt von 0 bis 0,5 Gew.% auf.

Gegebenenfalls kann das organische Lösungsmittel abdestilliert werden. Die Dispersionen haben einen Festkörpergehalt von 20 bis 70 Gew.-%, bevorzugt 30 bis 65 Gew.-%. Die nichtflüchtigen Anteile dieser Dispersionen besitzen einen Gehalt an Zerewitinoff-aktiven Wasserstoff-Atomen enthaltenden chemischen Gruppen von 0 bis 0,53 mmol/g, bevorzugt von 0 bis 0,4 mmol/g, besonders bevorzugt von 0 bis 0,25 mmol/g.

Geeignete blockierte Polyisocyanate (A), die in den erfindungsgemäß einzusetzenden Schlichtezusammensetzungen enthalten sind, sind wasserdispergierbare oder wasserlösliche blockierte Polyisocyanate.

Geeignete wasserdispergierbare oder wasserlösliche blockierte Polyisocyanate (A) werden durch Umsetzung von
(A1) mindestens einem Polyisocyanat mit aliphatisch, cycloaliphatisch, araliphatisch und/oder aromatisch gebundenen Isocyanatgruppen,
(A2) mindestens einer ionischen oder potentiell ionischen und/oder nichtionischen Verbindung,
(A3) mindestens einem Blockierungsmittel,
(A4) gegebenenfalls einem oder mehreren (cyclo)aliphatischen Mono- bzw. Polyaminen mit 1 bis 4 Aminogruppen des Molekulargewichtsbereichs 32 bis 300,
(A5) gegebenenfalls einem oder mehreren mehrwertigen Alkoholen mit 1 bis 4 Hydroxylgruppen des Molekulargewichtsbereichs 50 bis 250 und
(A6) gegebenenfalls ein oder mehrere mit isocyanatreaktiven und ungesättigte Gruppen enthaltende Verbindungen erhalten.

Die Polyisocanate (A) können gegebenenfalls Stabilisierungsmittel (A7) und andere Hilfsstoffe sowie gegebenenfalls Lösemittel (A8) enthalten.

Die wasserdispergierbaren oder wasserlöslichen blockierten Polyisocyanate (A) sind aufgebaut aus 20 bis 80 Gew.%, bevorzugt 25 bis 75 Gew.%, besonders bevorzugt 30 bis 70 Gew.% der Komponente (A1), 1 bis 40 Gew.-%, bevorzugt 1 bis 35 Gew.-%, besonders bevorzugt 5 bis 30 Gew.-% der Komponente (A2), 15 bis 60 Gew.-%, bevorzugt 20 bis 50 Gew.-%, besonders bevorzugt 25 bis 45 Gew.-% der Komponente (A3), 0 bis 15 Gew.%, bevorzugt 0 bis 10 Gew.-%, besonders bevorzugt 0 bis 5 Gew.-% der Komponente (A4), 0 bis 15 Gew.%, bevorzugt 0 bis 10 Gew.-%, besonders bevorzugt 0 bis 5 Gew.-% der Komponente (A5), 0 bis 40 Gew.%, bevorzugt 0 Gew.-% der Komponente (A6) sowie 0 bis 15 Gew.-%, bevorzugt 0 bis 10 Gew.-%, besonders bevorzugt 0 bis 5 Gew.-% der Komponente (A7) und gegebenenfalls 0 bis 20 Gew.-%, bevorzugt 0 bis 15 Gew.-%, besonders bevorzugt 0 bis 10 Gew.-% der Komponente (A8), wobei die Summe der Komponenten sich zu 100 Gew.-% addiert.

Die wasserdispergierbaren oder wasserlöslichen blockierten Polyisocyanate (A) können in den Beschichtungsmitteln als wässrige Lösung oder Dispersion verwendet werden. Die Lösung oder Dispersion der Polyisocyanate weist einen Festkörpergehalt zwischen 10 bis 70 Gew.-%, bevorzugt von 20 bis 60 Gew.-% und besonders bevorzugt von 25 bis 50 Gew.-% auf und der Anteil von (A8) an der Gesamtzusammensetzung ist bevorzugt kleiner 15 Gew.-% und besonders bevorzugt kleiner 10 Gew.-% und ganz besonders bevorzugt kleiner 5 Gew.-%.

Die zur Herstellung der blockierten Polyisocyanate (A) verwendeten Polyisocyanate (A1) weisen eine (mittlere) NCO-Funktionalität von 2,0 bis 5,0, bevorzugt von 2,3 bis 4,5, einen Gehalt an Isocyanatgruppen von 5,0 bis 27,0 Gew.-%, bevorzugt von 14,0 bis 24,0 Gew.-% und einen Gehalt an monomeren Düsocyanaten von weniger als 1 Gew.-%, bevorzugt weniger als 0,5 Gew.-% auf. Die Isocyanatgruppen der Polyisocyanate (A1) liegen zu mindestens 50 %, bevorzugt zu mindestens 60 % und besonders bevorzugt zu mindestens 70 % in blockierter Form vor.

Geeignete Polyisocyanate (A1) zur Herstellung der blockierten Polyisocyanate (A) sind die durch Modifizierung einfacher aliphatischer, cycloaliphatischer, araliphatischer und/oder aromatischer Diisocyanate hergestellten, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) Seite 185-200 beispielhaft beschrieben sind.

Geeignete Verbindungen für die Komponente (A2) sind ionische oder potentiell ionische und/oder nichtionische Verbindungen wie sie bereits unter der Komponente (b1) beschrieben wurden.

Die Komponente (A2) ist bevorzugt eine Kombination aus nichtionischen und ionischen Hydrophilierungsmitteln. Besonders bevorzugt sind Kombinationen aus nichtionischen und anionischen Hydrophilierungsmitteln.

Als Beispiel für Blockierungsmittel (A3) seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin oder beliebige Gemische dieser Blockierungsmittel. Bevorzugt werden Butanonoxim, 3,5-Dimethylpyrazol, ε-Caprolactam, N-tert.-Butyl-benzylamin als Blockierungsmittel (A3) verwendet. Besonders bevorzugte Blockierungsmittel (A3) sind Butanonoxim und ε-Caprolactam.

Als Komponente (A4) kommen mono-, di-, tri-, und/oder tetra-aminofunktionelle Substanzen des Molekulargewichtsbereichs bis 300 in Betracht, wie z.B. Ethylendiamin, 1,2- und 1,3-Diaminopmpan, 1,3-, 1,4- und 1,6-Diaminohexan, 1,3-Diamino-2,2-dimethylpropan, 1-Amino-3,3,5-trimethyl-5-aminoethyl-cyclohexan (IPDA), 4,4'-Diaminodicyclohexylmethan, 2,4- und 2,6-Diamino-1-methyl-cyclohexan, 4,4'-Diamino-3,3'-dimethyl-dicyclohexylmethan, 1,4-Bis-(2-amino-prop-2-yl)-cyclohexan oder Gemische dieser Verbindungen.

Bei der Komponente (A5) handelt es sich um mono-, di-, tri- und/oder tetra-hydroxyfunktionelle Substanzen des Molekulargewichts bis 250, wie z.B. Ethylenglykol, Propylenglykol, 1,4-Butandiol, 1,6-Hexandiole, Glycerin, Trimethylolethan, Trimethylolpropan, die isomeren Hexantriole, Pentaerythrit oder Gemische dieser Verbindungen.

Als Komponente (A6) werden hydroxyfunktionelle und (meth)acrylfunktionelle Verbindungen mit den Isocyanaten umgesetzt. Solche Verbindungen sind beispielsweise als Bestandteile der Komponente (b2) oben beschrieben. Bevorzugt sind Verbindungen mit einer mittleren Hydroxyfunktionalität von 0,2 bis 2, besonders bevorzugt von 0,7 bis 1,3. Besonders bevorzugt sind 2-Hydroxyethyl(meth)acrylat, Poly(ε-caprolacton)monoacrylate, wie z.B. Tone M100^{®} (Union Carbide, USA), 2-Hydroxypropylacrylat, 4-Hydroxybutylacrylat, Trimethylolpropandiacrylat, Glycerindiacrylat, Pentaerythrittriacrylat oder Dipentaerythritpentaacrylat.

Die blockierten Polyisocyanate (A) können gegebenenfalls ein Stabilisierungmittel oder Stabilisierungsmittelgemisch (A7) enthalten. Geeignete Verbindungen (A7) sind z.B. Antioxidantien wie 2,6-Ditert-butyl-4-methylphenol, UV-Absorber vom Typ 2-Hydroxyphenyl-benzotriazol oder Lichtschutzmittel vom Typ der HALS-Verbindungen oder andere handelsübliche Stabilisierungsmittel, wie sie beispielsweise in "Lichtschutzmittel für Lacke" (A. Valet, Vincentz Verlag, Hannover, 1996,) und "Stabilization of Polymeric Materials" (H. Zweifel, Springer Verlag, Berlin, 1997, Appendix 3, S. 181-213) beschrieben sind.

Bevorzugt sind Stabilisierungsmittelgemische, die Verbindungen mit einen 2,2,6,6-Tetramethylpiperidinyl-Rest, (HALS) aufweisen. Der Piperidinyl-Stickstoff des HALS-Ringes ist nicht substituiert und weist keinerlei Hydrazidstrukturen auf. Besonders bevorzugt ist eine Verbindung der Formel (II), 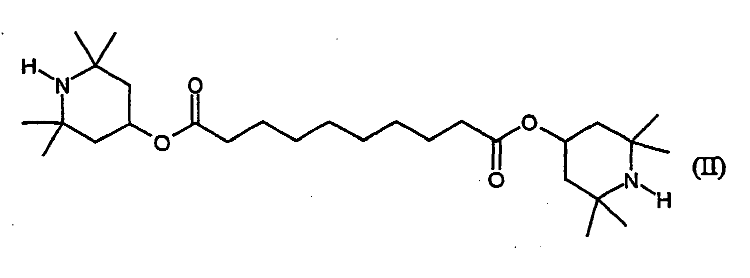 die beispielsweise unter der Bezeichnung Tinuvin^{®} 770 DF von der Firma Ciba Spezialitäten (Lampertheim, DE) vertrieben wird.

Idealerweise werden die o.g. Verbindungen kombiniert mit Substanzen die über Hydrazidstrukturen verfügen, wie beispielsweise Säurehydrazide und -dihydrazide, wie z.B. Essigsäurehydrazid Adipinsäurehydrazid, Adipinsäuredihydrazid oder auch Hydrazin-Addukte aus Hydrazin und cyclischen Carbonaten, wie sie beispielsweise in der EP-A 654 490 (S. 3, Zeile 48 bis S. 4 Zeile 3) genannt werden. Bevorzugt wird Adipinsäuredihydrazid und ein Addukt aus 2 Mol Propylencarbonat und 1 Mol Hydrazin der allgemeinen Formel (III),

-CO-NH-NH- (III)

verwendet.

Besonders bevorzugt ist das Addukt aus 2 Mol Propylencarbonat und 1 Mol Hydrazin der allgemeinen Formel (IV):

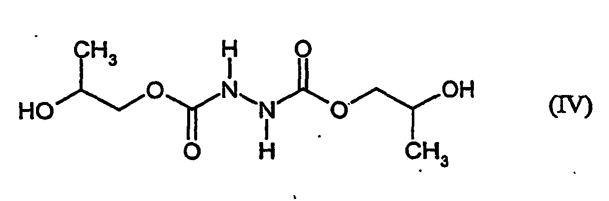

Als organische Lösungsmittel (A8) geeignet sind die an sich üblichen Lacklösungsmittel, wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol oder Testbenzin. Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®} (Shell Chemicals, Eschborn, DE), Cyclo Sol^{®} (Shell Chemicals, Eschborn, DE), Tolu Sol^{®} (Shell Chemicals, Eschborn, DE), Shellsol^{®} (Shell Chemicals, Eschborn, DE) im Handel sind, sind ebenfalls geeignet. Weitere Lösungsmittel sind beispielsweise Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton, ε-Methylcaprolacton, Propylengly koldiacetat, Diethylenglykoldimethylether, Dipropylenglykoldimethylether, Diethylenglykolethyl- und -butyletheracetat, N-Methylpyrrolidon und N-Methylcaprolactam oder beliebige Gemische solcher Lösungsmittel. Bevorzugte Lösungsmittel sind Aceton, 2-Butanon, 1-Methoxypropyl-2-acetat, Xylol, Toluol, Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®} (Shell Chemicals, Eschborn, DE), Cyclo Sol^{®} (Shell Chemicals, Eschborn, DE), Tolu Sol^{®} (Shell Chemicals, Eschborn, DE), Shellsol^{®} (Shell Chemicals, Eschborn, DE) im Handel sind sowie N-Methylpyrrolidon. Besonders bevorzugt sind Aceton, 2-Butanon und N-Methylpyrrolidon.

Die Herstellung der blockierten Polyisocyanate (A) kann nach bekannten Methoden des Standes der Technik (z.B. in der DE-A 2 456 469, Spalte 7-8, Beispiel 1-5 und DE-A 2 853 937 S. 21-26, Beispiel 1-9) erfolgen.

Die wasserdispergierbaren oder wasserlöslichen blockierten Polyisocyanate (A) können beispielsweise durch Umsetzung der Komponenten (A1), (A2), (A3) und gegebenenfalls (A4) bis (A7) in beliebiger Reihenfolge gegebenenfalls unter Zuhilfenahme eines organischen Lösungsmittels (A8) umgesetzt werden.

Bevorzugt wird zunächst (A1) mit gegebenenfalls einem Teil, bevorzugt dem nichtionischen Teil der Komponente (A2) sowie gegebenenfalls (A4) und (A5) umgesetzt. Es erfolgt anschließend die Blockierung mit der Komponente (A3) und darauf folgend die Umsetzung mit dem ionische Gruppen enthaltenden Teil der Komponente (A2). Gegebenenfalls können dem Reaktionsgemisch organische Lösungsmittel (A8) zugesetzt werden. In einem weiteren Schritt wird gegebenenfalls noch die Komponente (A7) hinzugefügt.

Die Herstellung der wässrigen Lösung oder Dispersion der blockierten Polyisocyanate (A) erfolgt anschließend, indem die wasserdispergierbaren blockierten Polyisocyanate durch Zugabe von Wasser in eine wässrige Dispersion oder Lösung überführt werden. Das gegebenenfalls verwendete organische Lösungsmittel (A8) kann im Anschluss an die Dispergierung destillativ entfernt werden. Bevorzugt wird auf die Verwendung von Lösungsmittel (A8) verzichtet.

Vorgenannte wasserdispergierbare oder wasserlösliche blockierte Polyisocyanate können auch ungesättigte, zur radikalischen Polymerisation befähigte Gruppen enthalten. Dazu können die Polyisocyanate vor dem Dispergieren, Emulgieren oder Lösen in Wasser zunächst teilweise blockiert und dann mit isocyanatreaktiven und ungesättigte Gruppen enthaltenden Verbindungen (A6) umgesetzt werden oder die Polyisocyanate werden zunächst mit isocyanatreaktiven und ungesättigte Gruppen enthaltenden Verbindungen (A6) und dann mit Blockierungsmitteln (A3) umgesetzt.

Für die Herstellung der wässrigen Lösung oder Dispersion der blockierten Polyisocyanate (A) werden im Allgemeinen solche Mengen an Wasser eingesetzt, dass die resultierenden Dispersionen einen Feststoffgehalt von 10 bis 70 Gew.-%, bevorzugt 20 bis 60 Gew.-% und besonders bevorzugt 25 bis 50 Gew.-% aufweisen.

Als Initiatoren (C) für eine radikalische Polymerisation können durch Strahlung und/oder thermisch aktivierbare Initatoren zum Einsatz kommen. Fotoinitiatoren, die durch UV- oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind wie aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Diakoxyacetophenone und α-Hydroxyalkylphenone. Bevorzugt sind Fotoinitiatoren, die leicht in wässrige Beschichtungsmittel einarbeitbar sind. Solche Produkte sind beispielsweise Irgacure^{®} 500, Irgacure^{®} 819 DW (Fa. Ciba, Lampertheim, DE), Esacure^{®} KIP (Fa. Lamberti, Aldizzate, Italien). Es können auch Gemische dieser Verbindungen eingesetzt werden.

Wird die Härtung thermisch initiiert, eignen sich Peroxyverbindungen wie Diacylperoxide z.B. Benzoylperoxid, Alkylhydroperoxide wie Diisopropylbenzolmonohydroperoxid, Alkylperester wie tert.-Butylperbenzoat, Dialkylperoxide wie Di.-tert-butylperoxid Peroxidicarbonate wie Dicetylperoxiddicarbonat, anorganische Peroxide wie Ammoniumperoxodisulfat, Kaliumperoxodisulfat oder auch Azoverbindungen wie 2,2'-Azobis[N-(2-propenyl)-2-methylpropionamide], 1-[(cyano-1-methylethyl)azo]formainide, 2,2'-Azobis(N-butyl-2-methylpropionamide), 2,2'-Azo-bis(N-cyclohexyl-2-methylpropionamide), 2,2'-Azobis{2-methyl-N-[2-(1-hydroxybutyl)]propionamide}, 2,2'-Azobis{2-methyl-N-[2-(1-hydroxybutyl)]propionamide, 2,2'-Azobis{2-methyl-N-[1,1-bis(hydroxymethyl)-2-hydroxyethyl]propionamide, weiterhin auch Benzpinakol. Bevorzugt werden Verbindungen, die wasserlöslich sind oder als wässrige Emulsionen vorliegen. Diese Radikalbildner können in bekannter Weise mit Beschleunigern kombiniert werden.

Zur Herstellung der wässrigen Schlichte-Zusammensetzung werden die Bestandteile (I), (II) und (III) nacheinander in beliebiger Reihenfolge oder gleichzeitig miteinander vermischt. Die wässrigen Beschichtungsmittel besitzen keine Topfzeit und sind über Monate oder länger lagerstabil.

Für das erfindungsgemäße Verfahren wird die wässrige Schlichte-Zusammensetzung allein oder gegebenenfalls mit weiteren Bindemitteln wie z.B. Polyurethandispersionen, Polyacrylatdispersionen, Polyurethan-Polyacrylat-Hybriddispersionen, Polyvinylether- oder Polyvinylesterdispersionen, Polystyrol- oder Polyacrylnitrildispersionen, auch in Kombination mit weiteren blockierten Polyisocyanaten und Aminovernetzerharzen wie z.B. Melaminharzen eingesetzt.

Die Schlichte-Zusammensetzung kann die üblichen Hilfs- und Zusatzmittel enthalten, wie z.B. Entschäumungsmittel, Verdickungsmittel, Verlaufsmittel, Dispergierhilfsmittel, Katalysatoren, Hautverhinderungsmittel, Antiabsetzmittel, Antioxidantien, Weichmacher, Reativverdünner, Emulgatoren, Biozide, Haftvermittler, z.B. auf Basis der bekannten nieder- bzw. höhermolekularen Silane, Gleitmittel, Netzmittel, Antistatika.

Als Haftvermittler werden z.B. die bekannten Silan-Haftvermittler verwendet, beispielsweise 3-Aminopropyltrimethoxy- bzw. triethoxysilan, N-(2-Aminoethyl)-3-aminopropyltrimethoxysilan, 3-Glycidylpropyltrimethoxysilan, Vinyltrimethoxysilan, Vinyltriethoxysilan oder 3-Methacryloxypropyltriethoxysilan. Die Konzentration der Silanhaftvermittler in den erfindungsgemäßen Schichtemitteln beträgt bevorzugt 0,05 bis 2 Gew.-%, besonders bevorzugt 0,15 bis 0,85 Gew.-% bezogen auf die gesamte Schlichte.

Die Schlichten enthalten ein oder mehrere nichtionische und/oder ionische Gleitmittel enthalten, die z.B. aus folgenden Stoffgruppen bestehen können: Polyalkylenglykolether von Fettalkoholen oder Fettaminen, Polyalkylenglykolether und Glycerinester von Fettsäuren mit 12 bis 18 Kohlenstoffatomen, Polyalkylenglykole, höhere Fettsäureamide mit 12 bis 18 Kohlenstoffatomen von Polyalkylenglykolen und/oder Alkylenaminen, quartäre Stickstoffverbindungen, z.B. ethoxylierte Imidazoliniumsalze, Mineralöle und Wachse. Das oder die Gleitmittel werden bevorzugt in der Gesamtkonzentration zwischen 0,05 und 1,5 Gew.-% bezogen auf die gesamte Schlichte, angewendet.

Die Schlichten können ein oder mehrere Antistatika, wie z.B. Lithiumchlorid, Ammoniumchlorid, Cr-III-Salze, organische Titanverbindungen, Arylalkylsulfate- oder Sulfonate, Arylpolyglykolethersulfonate oder quartäre Stickstoffverbindungen, enthalten. Die Antistatika werden bevorzugt in Konzentrationen von 0,01 bis 0,8 Gew.-% angewendet.

Darüber hinaus enthalten die Schlichten gegebenenfalls noch weitere dem Stand der Technik nach bekannte Hilfs- und Zusatzstoffe, wie sie beispielsweise in K.L. Loewenstein "The Manufacturing Technology of Continous Glass Fibres", Elsevier Scientific Publishing Corp., Amsterdam, London, New York, 1983, beschrieben sind.

Die Herstellung der Schlichten kann nach den an sich bekannten Methoden erfolgen. Bevorzugt wird in einem geeigneten Mischbehälter ca. die Hälfte des insgesamt benötigten Wassers vorgelegt und unter Rühren das Bindemittel, der Härter, und anschließend das Gleitmittel 4) und gegebenenfalls andere, übliche Hilfsmittel zugesetzt. Danach wird der pH-Wert auf 5-7 eingestellt und nun nach Angaben des Herstellers (z.B. UCC, New York) hergestelltes Hydrolysat eines Haftvermittlers z.B. eines Trialkoxysilans zugesetzt. Nach einer weiteren Rührzeit von 15 Minuten ist die Schlichte gebrauchsfertig; gegebenenfalls wird der pH-Wert erneut auf 5-7 angeglichen.

Die Schlichten können über beliebige Methoden auf die Glasfaser appliziert werden, beispielsweise mit Hilfe geeigneter Vorrichtungen, wie z.B. Sprüh- oder Walzapplikatoren.

Geeignete Glasfasern sind sowohl die für die Glasseidenfabrikation verwendeten, bekannten Glastypen wie E-, A-, C-, und S- Glas als auch die anderen an sich bekannten Erzeugnisse der Glasfaserhersteller. Bevorzugt sind E-Glasfasem, die für die Herstellung von Endlosglasfasern aufgrund ihrer Alkalifreiheit, hohen Zugfestigkeit und hohen Elastizitätsmodul für die Verstärkung von Kunststoffen, eingesetzt werden.

Das Verfahren zur Herstellung, das Verfahren der Beschlichtung und die Nachbearbeitung der Glasfasern ist bekannt und beispielsweise in K.L. Loewenstein "The Manufacturing Technology of Continous Glass Fibres", Elsevier Scientific Publishing Corp., Amsterdam, London, New York, 1983, beschrieben.

Üblicherweise werden die Schlichten auf die mit hoher Geschwindigkeit aus Spinndüsen gezogenen Glasfilamente sofort nach deren Erstarren, d.h. noch vor dem Aufwickeln aufgetragen. Es ist aber auch möglich, die Fasern im Anschluss an den Spirmprozess in einem Tauchbad zu beschlichten. Die beschlichteten Glasfasern können entweder nass oder trocken beispielsweise zu Schnittglas verarbeitet werden. Die Trocknung des End- oder Zwischenproduktes findet durch Bestrahlung mit energiereicher Strahlung, bevorzugt ultraviolettem Licht und/oder durch Erwärmen auf Temperaturen zwischen 50 bis 200°C, bevorzugt 70 bis 150°C statt. Unter Trocknung ist dabei nicht allein die Entfernung von anderen flüchtigen Bestandteilen zu verstehen, sondern z.B. auch das Festwerden der Schlichtebestandteile. Erst nach beendeter Trocknung hat sich die Schlichte in die fertige Überzugsmasse verwandelt. Der Anteil der Schlichte beträgt, bezogen auf die beschlichteten Glasfasern, bevorzugt 0,1 bis 5,0 Gew.%, besonders bevorzugt 0,1 bis 3,0 Gew.-% und ganz besonders bevorzugt 0,3 bis 1,5 Gew.-%.

Bevorzugt findet die Trocknung der beschlichteten Glasfaser mehrstufig statt: Zunächst wird durch Wärme, Konvektion, Wärmestrahlung und/oder entfeuchtete Luft Wasser und gegebenenfalls vorhandenes Lösungsmittel aus der Schlichte entfernt. Dann erfolgt die Härtung durch UV-Bestrahlung. Dabei kommen die üblichen Strahler nach dem Stand der Technik zum Einsatz. Bevorzugt werden Quecksilber Hoch- oder Mitteldruckstrahler, die gegebenenfalls durch Elemente wie Gallium oder Eisen dotiert sein können. Es kann zweckmäßig sein auch mehrere Strahler hintereinander, nebeneinander oder in beliebigen dreidimensionalen Anordnungen zu kombinieren. Weiterhin kann es zweckmäßig sein, die UV-Bestrahlung bei erhöhten Temperaturen, bei 30 bis 200°C, durchzuführen.

Die beschlichteten Glasfasern können anschließend in Matrixpolymere eingearbeitet werden.

Als Matrixpolymere können eine Vielzahl von Thermoplasten oder duroplastisch härtbaren Polymeren verwendet werden. Beispielsweise sind als thermoplastische Polymere geeignet: Polyolefine wie Polyethylen oder Polypropylen, Polyvinylchlorid, Polymerisate wie Styrol/Acrylnitril-Copolymere, ABS, Polymethacrylat oder Polyoxymethylen, aromatische und/oder aliphatische Polyamide wie Polyamid-6 oder Polyamid-6,6, Polykondensate wie Polycarbonat, Polyethylenterephthalat, flüssig-kristalline Polyarylester, Polyarylenoxid, Polysulfon, Polyarylensulfid, Polyarylsulfon, Polyethersulfon, Polyarylether oder Polyetherketon oder Polyaddukte wie Polyurethane. Als duroplastisch härtbare Polymere seien beipielsweise genannt: Epoxidharze, ungesättigte Polyesterharze, Phenolharze Aminharze, Polyurethanharze, Polyisocyanurate, Epoxid/Isocyanurat-Kombinationsharze, Furanharze, Cyanuratharze und Bismaleinimidharze.

Die Einarbeitung in die Polymermatrix kann nach den allgemein üblichen, dem Fachmann, bekannten Methoden (wie z.B. Extrudierung) erfolgen. Hierbei werden üblicherweise Temperaturen zwischen 150 und 300°C erreicht, die zu einer thermischen Nachhärtung der Schlichte unter Freisetzung der Polyisocyanatgruppen durch Deblockierung und gegebenenfalls Vernetzung dieser mit der Polymermatrix führt.

### Beispiele:

### UV-PUR-Dispersionen

### Beispiel 1:

Herstellung eines Polyesteracrylats 1a) analog DE-C 197 15 382 (S.5 Z. 21 - 27), OH-Zahl: 160 mg KOH/g, Säurezahl: 1 mg KOH/g, Viskosität: 0,5 Pa s bei 23°C.

### Herstellung einer Polyurethandispersion

In einem Reaktionsgefäß mit Rührer, Innenthermometer und Gaseinleitung (Luftstrom 1 l/h) werden 298,0 g des Polyesteracrylats 1a), und 27,0 g des Polyethers LB 25 (Bayer AG, DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I ^{®}, Bayer AG, DE) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 3,6 - 3,8 Gew.-% enthält. Wenn der NCO-Gehalt erreicht ist, wird das Prepolymer in 350,0 g Aceton gelöst und auf 40°C eingestellt.

Dann wird eine Lösung aus, 9,9 g Ethylendiamin, 47,5 g 45 %ige AAS-Lösung (2-(2-Aminoethylamino-)ethansulfonsäure, in Wasser, Bayer AG, Leverkusen, DE) und 67,6 g Wasser in 2 min. zugegeben und 5 min. verrührt. Anschließend werden 692,8 g Wasser innerhalb 10 min. zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50°C destilliert bis ein Festkörper von 39 % erreicht ist. Die Dispersion hat einen pH-Wert von 7,0 und eine mittlere Teilchengröße von 86 nm (Laser-Korrelations-Spektroskopie-Messung: Zetasizer 1000, Malvern Instruments, Malvern, UK).

### Beispiel 2:

### Herstellung einer Polyurethandispersion

In einem Reaktionsgefäß mit Rührer, Innenthermometer und Gaseinleitung (Luftstrom 1 l/h) werden 298,0 g des Polyesteracrylats 1a), 27,0 g des Polyethers LB 25 (Bayer AG, DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I ^{®}, Bayer AG, DE) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 4,2 - 4,4 Gew.-% enthält. Wenn der NCO-Gehalt erreicht ist, wird das Prepolymer in 350,0 g Aceton gelöst und auf 40°C eingestellt.

Dann wird eine Lösung aus, 11,4 g Ethylendiamin, 36,9 g 45 %ige AAS-Lösung (2-(2-Aminoethylamino-)ethansulfonsäure, in Wasser, Bayer AG, Leverkusen, DE) und 63,7 g Wasser in 2 min. zugegeben und 5 min. verrührt. Anschließend werden 698,5 g Wasser innerhalb 10 min. zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50°C destilliert bis ein Festkörper von 39 % erreicht ist. Die Dispersion hat einen pH-Wert von 6,6 und eine mittlere Teilchengröße von 113 nm (Laser-Korrelations-Spektroskopie-Messung: Zetasizer 1000, Malvern Instruments, Malvern, UK).

### Beispiel 3:

### Herstellung einer Polyurethandispersion

In einem Reaktionsgefäß mit Rührer, Innenthermometer und Gaseinleitung (Luftstrom 1 l/h) 298,0 g des Polyesteracrylats 1a), 27,0 g des Polyethers LB 25 (Bayer AG, DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I ^{®}, Bayer AG, DE) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 4,2 - 4,4 Gew.-% enthält. Wenn der NCO-Gehalt erreicht ist, wird das Prepolymer in 350,0 g Aceton gelöst und auf 40°C eingestellt.

Dann wird eine Lösung aus, 12,1 g Ethylendiamin, 31,7 g 45 %ige AAS-Lösung (2-(2-Aminoethylamino-)ethansulfonsäure, in Wasser, Bayer AG, Leverkusen, DE) und 61,7 g Wasser in 2 min. zugegeben und 5 min. verrührt. Anschließend werden 700,9 g Wasser innerhalb 10 min. zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50°C destilliert bis ein Festkörper von 39 % erreicht ist. Die Dispersion hat einen pH-Wert von 6,8 und eine mittlere Teilchengröße von 83 nm (Laser-Korrelations-Spektroskopie-Messung: Zetasizer 1000, Malvern Instruments, Malvern, UK).

### Beispiel 4:

### Herstellung einer Polyurethandispersion

In einem Reaktionsgefäß mit Rührer, Innenthermometer und Gaseinleitung (Luftstrom 1 l/h) werden 139,0 g des Polyesters PE 170 HN (Ester auf Basis von Adipinsäure, 1,6-Hexandiol, Neopentylglykol, MG = 1700, Bayer AG, Leverkusen, DE), 238,5 g des Polyesteracrylats 1a), 27,0 g des Polyethers LB 25 (Bayer AG, Leverkusen, DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I ^{®}, Bayer AG, Lev., DE) und 170,0 g Aceton wird das. Reaktionsgemisch auf Rückflusstemperatur aufgeheizt. Es wird solange bei dieser Temperatur gerührt, bis die Reaktionsmischung einen NCO-Gehalt von 3,6 - 3,8 Gew.-% enthält. Wenn der NCO-Gehalt erreicht ist, wird das Prepolymer in 350,0 g Aceton gelöst und auf 40°C eingestellt.

Dann wird eine Lösung aus, 11,4 g Ethylendiamin, 36,9 g 45 %ige AAS-Lösung (2-(2-Aminoethylamino-)ethansulfonsäure, in Wasser, Bayer AG, Leverkusen, DE) und 63,7 g Wasser in 2 min. zugegeben und 5 min. verrührt. Anschließend werden 817,7 g Wasser innerhalb 10 min. zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50 °C destilliert bis ein Festkörper von 40 % erreicht ist. Die Dispersion hat einen pH-Wert von 6,8 und eine mittlere Teilchengröße von 83 nm (Laser-Korrelations-Spektroskopie-Messung: Zetasizer 1000, Malvern Instruments, Malvern, UK).

### Beispiel 5:

### Herstellung einer Polyurethandispersion

In einem Reaktionsgefäß mit Rührer, Innenthermometer und Gaseinleitung (Luftstrom 1 l/h) werden 278,0 g des Polyesters PE 170 HN (Ester auf Basis von Adipinsäure, 1,6-Hexandiol, Neopentylglykol, MG = 1700, Bayer AG, Leverkusen, DE), 179,0 g des Polyesteracrylats 1a), 27,0 g des Polyethers LB 25 (Bayer AG; Lev., DE, monofunktioneller Polyether auf Ethylenoxid-/Propylenoxidbasis mit einem mittleren Molgewicht von 2250 (OHZ = 25)) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 3,3 - 3,5 Gew.-% enthält. Wenn der NCO-Gehalt erreicht ist, wird das Prepolymer in 350,0 g Aceton gelöst und auf 40°C eingestellt.

Dann wird eine Lösung aus, 11,4 g Ethylendiamin, 36,9 g 45 %ige AAS-Lösung (2-(2-Aminoethylamino-)ethansulfonsäure, in Wasser, Bayer AG, Leverkusen, DE) und 63,7 g Wasser in 2 min. zugegeben und 5 min. verrührt. Anschließend werden 936,9 g Wasser innerhalb 10 min. zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50°C destilliert bis ein Festkörper von 40 % erreicht ist. Die Dispersion hat einen pH-Wert von 6,7 und eine mittlere Teilchengröße von 176 nm (Laser-Korrelations-Spektroskopie-Messung: Zetasizer 1000, Malvern Instruments, Malvern, UK).

### Beispiel 6:

### Herstellung einer Polyurethandispersion

In einem Reaktionsgefäß mit Rührer, Innenthermometer und Gaseinleitung (Luftstrom 1 l/h) werden 418,0 g des Polyesters PE 170 HN (Ester auf Basis von Adipinsäure, 1,6-Hexandiol, Neopentylglykol, MG = 1700, Bayer AG, Leverkusen, DE), 119,0 g des Polyesteracrylats 1a), 27,0 g des Polyethers LB 25 (Bayer AG, Lev., DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I ^{®}, Bayer AG, Lev., DE) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 3,0 - 3,2 Gew.-% enthält. Wenn der NCO-Gehalt erreicht ist, wird das Prepolymer in 350,0 g Aceton gelöst und auf 40°C eingestellt.

Dann wird eine Lösung aus, 11,4 g Ethylendiamin, 36,9 g 45 %ige AAS-Lösung (2-(2-Aminoethylamino-)ethansulfonsäure, in Wasser, Bayer AG, Leverkusen, DE) und 63,7 g Wasser in 2 min. zugegeben und 5 min. verrührt. Anschließend werden 1057,2 g Wasser innerhalb 10 min. zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50 °C destilliert bis ein Festkörper von 40 % erreicht ist. Die Dispersion hat einen pH-Wert von 6,7 und eine mittlere Teilchengröße von 192 nm (Laser-Korrelations-Spektroskopie-Messung: Zetasizer 1000, Malvern Instruments, Malvern, UK).

### Wasserdispergierbare blockierte Polyisocyanate (A)

### Beispiel 7:

108,4 g eines biuretgruppen-haltigen Polyisocyanates auf Basis von 1,6-Diisocyanatohexan (HDI) mit einem NCO-Gehalt von 23,0 % wird bei 40°C vorgelegt. Innerhalb von 10 min. werden 91,1 g Polyether LB 25 (Bayer AG, Lev., DE, monofunktioneller Polyether auf Ethylenoxid-/Propylenoxidbasis mit einem mittleren Molgewicht von 2250 (OHZ = 25) und 1,2 g des oben genannten Hydrazin-Adduktes aus 1 Mol Hydrazinhydrat und 2 Mol Propylencarbonat vom Molekulargewicht 236 der Formel (III) unter Rühren zudosiert. Anschließend heizt man das Reaktionsgemisch auf 90°C und rührt solange bei dieser Temperatur bis der theoretische NCO-Wert erreicht ist. Nach Abkühlen auf 65°C werden innerhalb von 30 min. 88,3 g N-tert.-Butylbenzylamin unter Rühren so zugetropft, dass die Temperatur des Gemisches 70°C nicht übersteigt. Anschließend werden 1,5 g Tinuvin^{®} 770 DF (Ciba Spezialitäten GmbH, Lampertheim, DE) zugegeben, 10 min. weitergerührt und das Reaktionsgemisch auf 60°C abgekühlt. Die Dispergierung erfolgt durch Zugabe von 713,0 g Wasser (20°C) bei 60°C innerhalb von 30 min. Die Nachrührzeit bei 40°C beträgt 1 h. Es wird eine lagerstabile wässrige Dispersion des blockierten Polyisocyanats mit einem Festkörpergehalt von 27,3 % erhalten.

### Beispiel 8:

147,4 g eines biuretgruppen-haltigen Polyisocyanates auf Basis von 1,6-Diisocyanatohexan (HDI) mit einem NCO-Gehalt von 23,0 % wird bei 40°C vorgelegt. Innerhalb von 10 min. werden 121,0 g Polyether LB 25 (Bayer AG, Lev., DE, monofunktioneller Polyether auf Ethylenoxid-/Propylenoxidbasis mit einem mittleren Molgewicht von 2250 (OHZ = 25) unter Rühren zudosiert. Anschließend heizt man das Reaktionsgemisch auf 90°C und rührt solange bei dieser Temperatur bis der theoretische NCO-Wert erreicht ist. Nach Abkühlen auf 65°C werden innerhalb von 30 min. 62,8 g Butanonoxim unter Rühren so zugetropft, dass die Temperatur des Gemisches 80°C nicht übersteigt. Die Dispergierung erfolgt durch Zugabe von 726,0 g Wasser (T = 20°C) bei 60°C innerhalb von 30 min. Die Nachrührzeit bei 40°C beträgt 1 h. Es wird eine lagerstabile wässrige Dispersion des blockierten Polyisocyanats mit einem Festkörpergehalt von 30,0 % erhalten.

### Beispiel 9:

13,5 g Polyether LB 25 (Bayer AG, Lev., DE, monofunktioneller Polyether auf Ethylenoxid-/Propylenoxidbasis mit einem mittleren Molgewicht von 2250 (OHZ = 25)) und 122,6 g N-tert-Butylbenzylamin werden vorgelegt und unter Rühren auf 90°C aufgeheizt. Anschließend werden 193,0 eines isocyanuratgruppen-haltigen Polyisocyanats auf Basis von 1,6- Düsocyanatohexan (HDI) mit einem NCO-Gehalt von 21,8 % innerhalb von 30 min. so zugegeben, dass die Temperatur der Reaktionsmischung 70°C nicht überschreitet. Nach Zugabe von 11,1 g des oben genannten Hydrazin-Adduktes aus 1 Mol Hydrazinhydrat und 2 Mol Propylencarbonat vom Molekulargewicht 236 wird solange bei 70°C gerührt bis der theoretische NCO-Wert erreicht ist. Anschließend werden 3,5 g Tinuvin^{®} 770 DF (Ciba Spezialitäten GmbH, Lampertheim, DE) bei 70°C in 5 min. zugegeben und das Reaktionsgemisch weitere 5 min. gerührt. 24,6 g des Hydrophilierungsmittel KV 1386 (BASF AG, Ludwigshafen, DE) gelöst in 73,7 g Wasser werden innerhalb von 2 min. zudosiert und das Reaktionsgemisch 15 min. weitergerührt. Die Dispergierung durch Zugabe von 736,4 g Wasser (T = 60°C) in 10 min. Die Nachrührzeit beträgt 2 h. Es wird eine lagerstabile Dispersion mit einem Festkörper von 27,6 % erhalten.

### Beispiel 10:

963,0 g eines biuretgruppen-haltigen Polyisocyanats auf Basis von 1,6-Diisocyanatohexan (HDI) mit einem NCO-Gehalt von 23,0 % werden mit 39,2 g Polyether LB 25 (Bayer AG, Lev., DE, monofunktioneller Polyether auf Ethylenoxid-/Propylenoxidbasis mit einem mittleren Molgewicht von 2250 (OHZ = 25))und 7,8 g des oben genannten Hydrazin-Adduktes aus 1 Mol Hydrazinhydrat und 2 Mol Propylencarbonat vom Molekulargewicht 236 30 min. bei 100°C gerührt. Anschließend wird innerhalb von 20 min. 493,0 g ε-Caprolactam so zugegeben, dass die Temperatur des Reaktionsgemisches 110°C nicht übersteigt. Es wird solange bei 110°C gerührt bis der theoretische NCO-Wert erreicht ist und danach auf 90°C abgekühlt. Nach Zugabe von 7,9 g Tinuvin^{®} 770 DF (Ciba Spezialitäten GmbH, Lampertheim, DE) und einer Nachrührzeit von 5 min. wird innerhalb von 2 min. eine Mischung aus 152,5 g des Hydrophilierungsmittels KV 1386 (BASF AG, Ludwigshafen, DE) und 235,0 g Wasser zudosiert und weitere 7 min. temperatumeutral weitergerührt. Im Anschluss daran erfolgt die Dispergierung durch Zugabe von 3341,4 g Wasser. Nach einer Nachrührzeit von 4 h wird eine lagerstabile wässrige Dispersion mit einem Festkörpergehalt von 29,9 % erhalten.

### Beispiel 11:

192,6 g eines biuretgruppen-haltigen Polyisocyanats auf Basis von 1,6-Diisocyanatohexan (HDI) mit einem NCO-Gehalt von 23,0 % werden mit 7,8 g Polyether LB 25 (Bayer AG, Leverkusen, DE, monofunktioneller Polyether auf Ethylenoxid-/Propylenoxidbasis mit einem mittleren Molgewicht von 2250 (OHZ = 25)) 30 min. bei 100°C gerührt. Anschließend wird bei 70°C innerhalb von 30 min. F42,0 g N-tert.-Butylbenzylamin so zugegeben, dass die Temperatur des Reaktionsgemisches 75°C nicht übersteigt. Es wird solange bei 75°C gerührt bis der theoretische NCO-Wert erreicht ist. Innerhalb von 2 min. wird eine Mischung aus 27,5 g des Hydrophilierungsmittels KV 1386 (BASF AG, Ludwigshafen, DE) und 46,8 g Wasser zudosiert und weitere 7 min. temperatumeutral weitergerührt. Im Anschluss daran erfolgt die Dispergierung durch Zugabe von 761,3 g Wasser. Nach einer Nachrührzeit von 4 h wird eine lagerstabile wässrige Dispersion mit einem Festkörpergehalt von 28,0 % erhalten.

### Beispiel 12:

154,1 g eines biuretgruppen-haltigen Polyisocyanats auf Basis von 1,6-Diisocyanatohexan (HDI) mit einem NCO-Gehalt von 23,0 % werden mit 6,3 g Polyether LB 25 (Bayer AG, Lev., DE, monofunktioneller Polyether auf Ethylenoxid-/Propylenoxidbasis mit einem mittleren Molgewicht von 2250 (OHZ = 25) 30 min. bei 100°C gerührt. Anschließend wird bei 90°C innerhalb von 20 min. 60,6 g Butanonoxim so zugegeben, dass die Temperatur des Reaktionsgemisches 110°C nicht übersteigt. Es wird solange bei 100°C gerührt bis der theoretische NCO-Wert erreicht ist und danach auf 90°C abgekühlt. Nach einer Nachrührzeit von 5 min. wird innerhalb von 2 min. eine Mischung aus 22,0 g des Hydrophilierungsmittels KV 1386 (BASF AG, Ludwigshafen, DE) und 37,5 g Wasser zudosiert und weitere 7 min. temperaturneutral weitergerührt. Im Anschluss daran erfolgt die Dispergierung durch Zugabe von 485,5 g Wasser. Nach einer Nachrührzeit von 4 h wird eine lagerstabile wässrige Dispersion mit einem Festkörpergehalt von 29,8 % erhalten.

### Beispiel 13:

963,0 g eines biuretgruppen-haltigen Polyisocyanats auf Basis von 1,6-Diisocyanatohexan (HDI) mit einem NCO-Gehalt von 23,0 % werden mit 39,2 g Polyether LB 25 (Bayer AG, Lev., DE, monofunktioneller Polyether auf Ethylenoxid-/Propylenoxidbasis mit einem mittleren Molgewicht von 2250 (OHZ = 25) 30 min. bei 100°C gerührt. Anschließend wird innerhalb von 20 min. 493,0 g ε-Caprolactam so zugegeben, dass die Temperatur des Reaktionsgemisches 110°C nicht übersteigt. Es wird solange bei 110°C gerührt bis der theoretische NCO-Wert erreicht ist und danach auf 90°C abgekühlt. Nach einer Nachrührzeit von 5 min. wird innerhalb von 2 min. eine Mischung aus 152,5 g des Hydrophilierungsmittels KV 1386 (BASF AG, Ludwigshafen, DE) und 235,0 g Wasser zudosiert und weitere 7 min. temperatumeutral weitergerührt. Im Anschluss daran erfolgt die Dispergierung durch Zugabe von 3325,1 g Wasser. Nach einer Nachrührzeit von 4 h wird eine lagerstabile wässrige Dispersion mit einem Festkörpergehalt von 30,0 % erhalten.

### Beispiel 14:

Zu 343,20 g eines aliphatischen Polyisocyanats (Desmodur N 3300, Bayer AG, Leverkusen) wurden bei 70°C. unter Rühren 99,12 g PETIA (Pentaerytrithtriacrylat technisch, Fa.UCB GmbH, Kerpen, DE) und 9,45 g 1,6-Hexandiol zugegeben. Innerhalb von 3 Stunden wurde bei 70°C eine Lösung aus 37,76 g Hydroxypivalinsäure in 60,93 g N-Methylpyrrolidon zugetropft und anschließend 1 Stunde bei 70°C nachgerührt. Dann wurden bei 70°C 108,48 g Düsopropylamin innerhalb von 60 Minuten zugetropft und anschließend 30 Minuten nachgerührt. Nach dieser Zeit waren IR-spektroskopisch keine NCO-Gruppen mehr nachweisbar. Unter starkem Rühren wurden dann 883 g 70°C warmes entionisiertes Wasser zugegeben und 1 Stunde weiter gerührt. Nach Abkühlen unter Rühren auf Raumtemperatur wurde eine Dispersion mit nachfolgenden Eigenschaften erhalten:

| | |
|---|---|
| Festkörpergehalt: | 40 % |
| Viskosität (23°C): | 200 mPas |
| Partikelgröße (LKS): | 89 nm |

### Beispiel 15-17: Beschichtungsmittel aus UV härtbaren Polyurethan-dispersionen und wasserdispergierbaren blockierten Polyisocyanaten für den Einsatz in oder als Schlichten

Die Zusammensetzungen der Schlichten sind in den Tabellen 1-4 beschrieben. Die Bestimmung der mechanischen des Beschichtungsmittels bzw. der Schlichte erfolgt an freien Filmen die wie folgt hergestellt werden:

In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (nass) der resultierenden Beschichtung, und kann auf die gewünschte Auflage jedes Striches eingestellt werden. Die Beschichtung ist auch konsekutiv in mehreren Strichen möglich. Zum Aufbringen der einzelnen Striche werden die Produkte (wässrige Formulierungen werden vorher durch Zugabe von Ammoniak/ Polyacrylsäure auf eine Viskosität von 4500 mPa s gestellt) auf den Spalt zwischen Papier und vorderer Walze gegossen, das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

Die Bestimmung des 100 % Moduls, erfolgte nach DIN 53504 an Filmen > 100 µm Stärke.

Die Filmlagerung unter Hydrolysebedingungen erfolgt gemäß DIN EN 12280-3. Die Bestimmung der Mechanik dieser Filmproben wird nach 24 h Lagerung unter Normklimabedingungen (20°C und 65 % Luftfeuchtigkeit) gemäß DIN 53504 durchgeführt.

Der UV-Härtungsprozess wurde auf einer UV-Härtungsanlage der Firma IST (Nürtingen, DE) mit einem Gallium-dotierten UV-Strahler (Typ CK I) einer Leistung von 80 W/cm Lampenlänge bei einer Vorschubgeschwindigkeit von 2,5 m/min durchgeführt.

Die Ergebnisse der Prüfungen der mechanischen Eigenschaften der freien Filme belegen, dass mit dem oben angeführten Beschichtungsmittel je nach Trocknungsbedingungen verschiedene Vernetzungsmechanismen selektiv getrennt voneinander angesprochen werden können.

### 1. Bedingungen (Vergleich

- **45 Min bei 20°C trocknen**
- **10 Min bei 80°C trocknen**

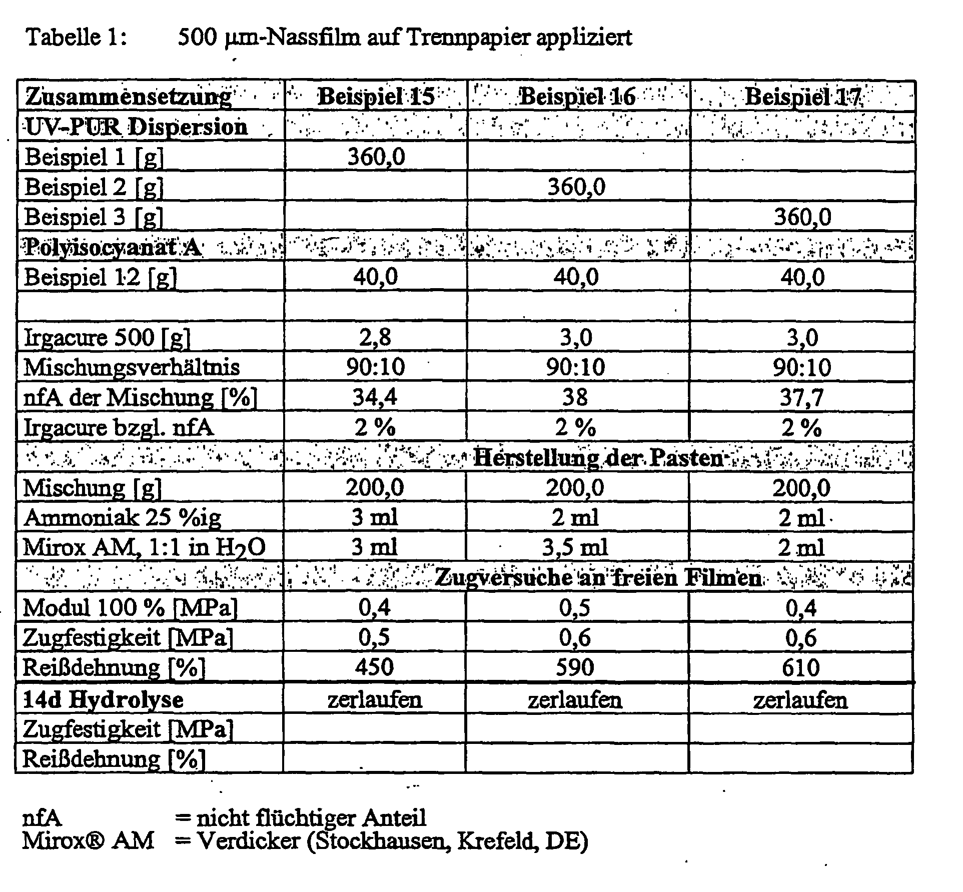

### 2. Bedingungen (Vergleich)

- **45 Min bei 20°C trocknen**
- **10 Min bei 80°C trocknen**
- **30 Min bei 150°C trocknen**

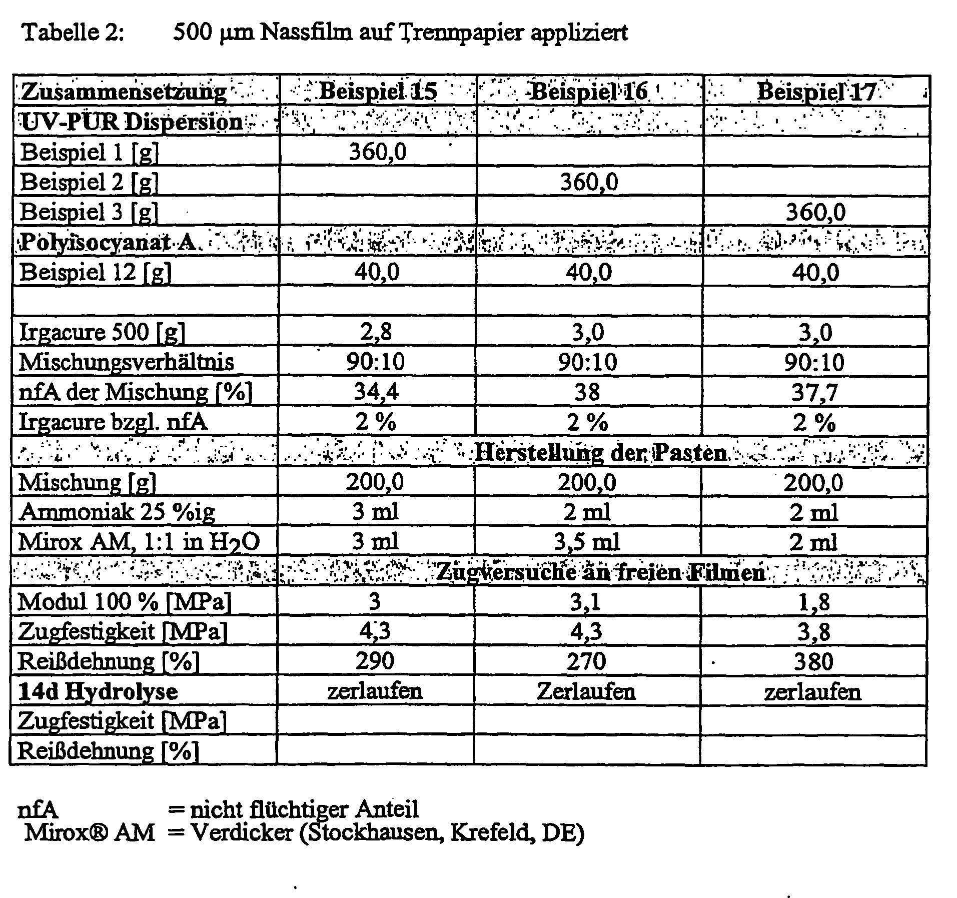

### 3. Bedingungen (Vergleich)

- **45 Min bei 20°C trocknen**
- **10 Min bei 80°C trocknen**
- **UV-Trocknung: 2,5 m/min 80 W**

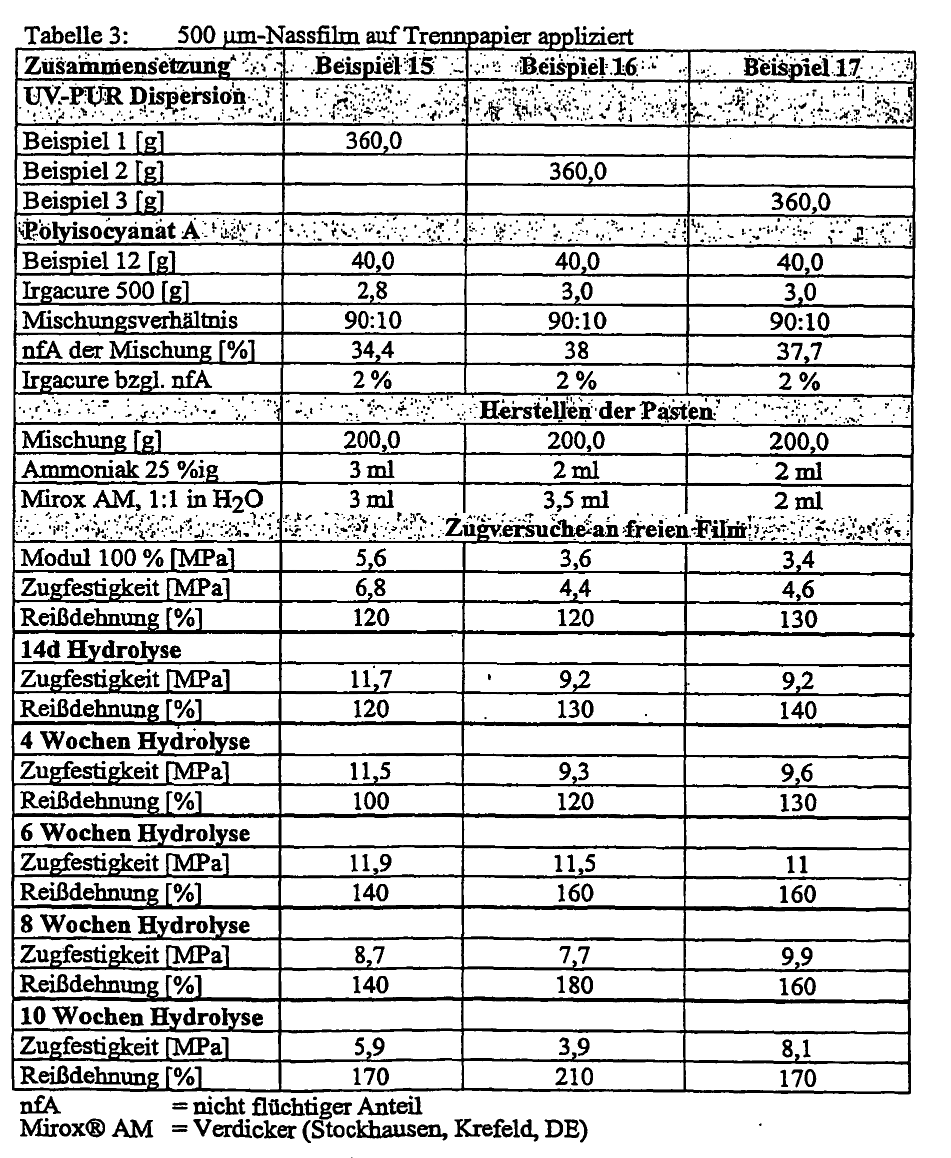

### 4. Bedingungen (erfindungsgemäß)

- **45 Min bei 20°C trocknen**
- **10 Min bei 80°C trocknen**
- **30 Min bei 150°C trocknen**
- **UV-Trochung: 2,5 m/min 80 W**

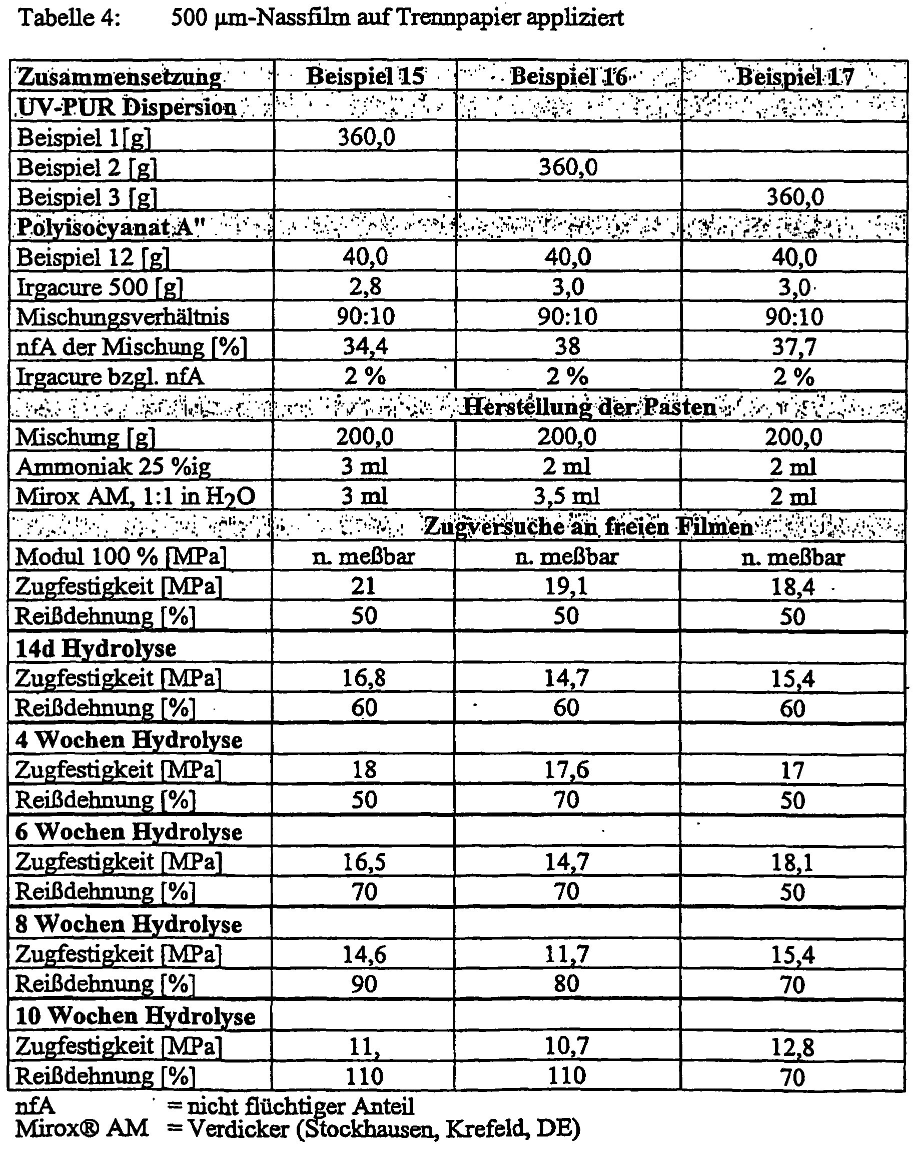

Alle in den Beispielen 1-17 beschriebenen Dispersionen eignen sich für den Einsatz in Schlichten und zeigen insbesondere gegenüber Aminosilanen wie z.B. Aminopropyltriethoxysilan (A1100, Union Carbide, USA) eine exzellente Verträglichkeit. Zur Prüfung auf A1100 Verträglichkeit wird zunächst eine 10 %ige wässrige Lösung mit einem pH-Wert von 5,5-6,5 (eingestellt mit 10 %iger Essigsäure) hergestellt Die vorbereitete A1100-Lösung wird in eine Bürette gegeben und 200 g PUR-Dispersion (aus den Beispielen 1-17) im Becherglas mit Magnetrührstäbchen versehen und auf einen Magnetrührer gestellt. Unter Rühren wird der pH-Wert der Dispersion gemessen, 2 ml A1100-Lösung hinzugetropft und solange der pH-Wert gemessen bis dieser einen konstanten Wert erreicht. Anschließend wiederholt man den Vorgang solange bis 10 % der Lösung (berechnet auf die gesamte Menge an PUR-Dispersion) in die PUR-Dispersion eingebracht wurden. Nach jeder Zugabe von Aminosilan A1100-Lösung wird der pH-Wert gemessen und dokumentiert. Sollte im Verlauf der Zugabe eine Unverträglichkeit zwischen PUR-Dispersion und Aminosilan A1100 zu beobachteten sein, wird die Prüfung abgebrochen. Andernfalls wird die mit A1100 versetzte Dispersion 24 h aufbewahrt um ggf. nachträgliche Veränderungen wie z.B. Koagulatbildung zu beobachten. Alle in den Beispielen 1-17 beschriebenen Dispersionen haben den oben genannten Verhäglichkeitstest bestanden.

## Patentansprüche

1. Verfahren zur Herstellung von glasfaserverstärkten Kunststoffen, **dadurch gekennzeichnet, dass** eine Schlichte-Zusammensetzung auf die Glasfaser appliziert, das Wasser entfernt wird, anschließend eine Bestrahlung mit energiereicher Strahlung erfolgt und in einem zweiten Schritt die beschlichtete Glasfaser in den Kunststoff eingetragen und eine thermische Härtung bei 150 bis 300°C unter Freisetzung der Polyisocyanat-Grruppen durch Deblockierung durchgeführt wird.

2. Verfahren zur Herstellung von glasfaserverstärkten Kunststoffen gemäß Anspruch 1, **dadurch gekennzeichnet, dass** die Schlichte-Zusammensetzung
(I) mindestens ein wasserdispergierbares oder wasserlösliches blockiertes Polyisocyanat (A),
(II) mindestens ein radikalisch polymerisierbare Gruppen enthaltendes Polyurethan (B) mit einem Gehalt an Zerewitinoff-aktiven Wasserstoff-Atomen enthaltenden Gruppen von 0 bis 0,53 mmol und
(III) einen Initiator (C), der eine radikalische Polymerisation auslösen kann,
enthält

3. Verfahren zur Herstellung von glasfaserverstärkten Kunststoffen gemäß Anspruch 1 oder 2, **dadurch gekennzeichnet, dass** das blockierte Polyisocyanat (A) ein Umsetzungsprodukt aus
(A1) mindestens einem Polyisocyanat mit aliphatisch, cycloaliphatisch, araliphatisch und/oder aromatisch gebundenen Isocyanatgruppen,
(A2) mindestens einer ionischen oder potentiell ionischen und/oder nichtionischen Verbindung,
(A3) mindestens einem Blockierungsmittel,
(A4) gegebenenfalls einem oder mehreren (cyclo)aliphatischen Mono- bzw. Polyaminen mit 1 bis 4 Aminogruppen des Molekulargewichtsbereichs 32 bis 300,
(A5) gegebenenfalls einem oder mehreren mehrwertigen Alkoholen mit 1 bis 4 Hydroxylgruppen des Molekulargewichtsbereichs 50 bis 250 und
(A6) gegebenenfalls ein oder mehrere isocyanatreaktive und ungesättigte Gruppen enthaltenden Verbindungen ist.

4. Verfahren zur Herstellung von glasfaserverstärkten Kunststoffen gemäß einem oder mehreren der Ansprüche 1 bis 3, **dadurch gekennzeichnet, dass** das Polyurethan (B) ein Reaktionsprodukt aus
(a) ein oder mehrere Di- oder Polyisocyanate,
(b1) ein oder mehrere hydrophilierend wirkende Verbindungen mit ionischen und/oder in ionische Gruppen überführbare Gruppen und/oder nichtionischen Gruppen,
(b2) ein oder mehrere Verbindungen mit radikalisch polymerisierbaren Gruppen,
(b3) gegebenenfalls ein oder mehrere Polyolverbindumgen mit einem mittleren Molekulargewicht von 50 bis 500, bevorzugt 80 bis 200 und einer Hydroxylfunktionalität größer oder gleich 2 und kleiner oder gleich 3,
(b4) gegebenenfalls ein oder mehrere Polyolverbindungen mit einem mittleren Molekulargewicht von 500 bis 13000 g/mol, bevorzugt 700 bis 4000 g/mol mit einer mittleren Hydroxylfunktionalität von 1,5 bis 2,5, bevorzugt von 1,8 bis 2,2, besonders bevorzugt von 1,9 bis 2,1,
(b5) gegebenenfalls ein oder mehrere Di- oder Polyamine ist.

## Claims

1. A method for producing glass fibre reinforced plastics, **characterised in that** a size composition is applied to the glass fibre, the water is removed, then irradiation with high-energy radiation proceeds and in a second step the sized glass fibre is introduced into the plastic and thermal curing is performed at 150 to 300°C with release of the polyisocyanate groups by deblocking.

2. A method for producing glass fibre reinforced plastics according to claim 1, **characterised in that** the size composition contains
(I) at least one water-dispersible or watersoluble blocked polyisocyanate (A),
(II) at least one polyurethane (B) containing free-radically polymerisable groups with a content of groups containing Zerevitinov-active hydrogen atoms of 0 to 0.53 mmol and
(III) an initiator (C) which is capable of initiating free-radical polymerisation.

3. A method for producing glass fibre reinforced plastics according to claim 1 or claim 2, **characterised in that** the blocked polyisocyanate (A) is a reaction product of
(A1) at least one polyisocyanate with aliphatically, cycloaliphatically, araliphatically and/or aromatically attached isocyanate groups,
(A2) at least one ionic or potentially ionic and/or nonionic compound,
(A3) at least one blocking agent,
(A4) optionally one or more (cyclo)aliphatic mono- or polyamines with 1 to 4 amino groups of the molecular weight range 32 to 300,
(A5) optionally one or more polyhydric alcohols with 1 to 4 hydroxyl groups of the molecular weight range 50 to 250 and
(A6) optionally one or more isocyanate-reactive compounds containing unsaturated groups.

4. A method for producing glass fibre reinforced plastics according to one or more of claims 1 to 3, **characterised in that** the polyurethane (B) is a reaction product of
(a) one or more di- or polyisocyanates,
(b1) one or more compounds having a hydrophilising action with ionic groups and/or groups convertible into ionic groups and/or nonionic groups,
(b2) one or more compounds with free-radically polymerisable groups,
(b3) optionally one or more polyol compounds with an average molecular weight of 50 to 500, preferably of 80 to 200 and a hydroxyl functionality of greater than or equal 2 and less than or equal to 3,
(b4) optionally one or more polyol compounds with an average molecular weight of 500 to 13000 g/mol, preferably of 700 to 4000 g/mol with an average hydroxyl functionality of 1.5 to 2.5, preferably of 1.8 to 2.2, particularly preferably of 1.9 to 2.1,
(b5) optionally one or more di- or polyamines.

## Revendications

1. Procédé pour la production de matières plastiques renforcées de fibres de verre, **caractérisé en ce que** l'on applique sur les fibres de verre une composition d'encollage, on élimine l'eau, on réalise ensuite une irradiation avec un rayonnement riche en énergie et on introduit dans une seconde étape les fibres de verre encollées dans la matière plastique et on réalise un durcissement thermique à de 150 à 300°C sous libération des groupes isocyanates par déblocage.

2. Procédé pour la préparation de matières plastiques renforcées de fibres de verre selon la revendication 1, **caractérisé en ce que** la composition d'encollage contient
(I) au moins un polyisocyanate bloqué dispersible dans l'eau ou soluble dans l'eau (A),
(II) au moins un polyuréthane contenant des groupes radicalairement polymérisables (B) avec une teneur en groupes contenant des atomes d'hydrogène Zéréwitinoff actifs de 0 à 0,53 mmol et
(III) un initiateur (C) qui peut déclencher une polymérisation radicalaire.

3. Procédé pour la préparation de matières plastiques renforcées de fibres de verre selon la revendication 1 ou 2, **caractérisé en ce que** le polyisocyanate bloqué (A) est un produit de réaction
(A1) d'au moins un polyisocyanate avec des groupes isocyanates liés par voie aliphatique, cycloaliphatique, araliphatique et/ou aromatique,
(A2) d'au moins un composé ionique ou potentiellement ionique et/ou non-ionique,
(A3) d'au moins un agent de blocage,
(A4) éventuellement d'une ou plusieurs mono- respectivement polyamines cyclo(aliphatiques) avec de 1 à 4 groupes amino du domaine de poids moléculaire 32 à 300,
(A5) éventuellement d'un ou plusieurs alcools polyvalents avec de 1 à 4 groupes hydroxyles du domaine de poids moléculaire 50 à 250 et
(A6) éventuellement d'un ou plusieurs composés contenant des groupes isocyanate-réactifs et insaturés.

4. Procédé pour la préparation de matières plastiques renforcées de fibres de verre selon l'une ou plusieurs quelconques des revendications 1 à 3, **caractérisé en ce que** le polyuréthane (B) est un produit de réaction
(a) d'un ou plusieurs di- ou polyisocyanates,
(b1) d'un ou plusieurs composés ayant une action hydrophilisante avec des groupes ioniques et/ou transformables en groupes ioniques et/ou des groupes non ioniques,
(b2) d'un ou plusieurs composés avec des groupes radicalairement polymérisables,
(b3) éventuellement d'un ou plusieurs composés polyols avec un poids moléculaire moyen de 50 à 500, de préférence de 80 à 200 et une fonctionnalité hydroxyle supérieure ou égale à 2 et inférieure ou égale à 3,
(b4) éventuellement d'un ou plusieurs composés polyols avec un poids moléculaire moyen de 500 à 13 000 g/mol, de préférence de 700 à 4 000 g/mol avec une fonctionnalité hydroxyle moyenne de 1,5 à 2,5, de préférence de 1,8 à 2,2, encore mieux de 1,9 à 2,1,
(b5) éventuellement d'une ou plusieurs di- ou polyamines.
